# EUROPEAN PATENT APPLICATION

(11) **EP 4 715 236 A1**
(43) Date of publication of application: **25.03.2026**
(21) Application number: 24806880.1
(22) Date of filing: 03.04.2024
(51) Int. Cl.: F16F 9/53, B60G 13/00, F16F 9/12, F16F 9/46

(54) **DAMPER DEVICE**

(30) Priority: 17.05.2023 JP 2023081774
(71) Applicant: THK CO., LTD., Minato-ku Tokyo 108-8506 (JP)
(72) Inventor: WATANABE, Yoshihito, Tokyo 108-8506 (JP); KAMADA, Shinobu, Tokyo 108-8506 (JP); NISHIDE, Tetsuhiro, Tokyo 108-8506 (JP); KANESHIGE, Hiroshi, Tokyo 108-8506 (JP); HANAJIMA, Yukihiro, Tokyo 108-8506 (JP); YAMADA, Tetsuya, Tokyo 108-8506 (JP); TANIFUJI, Junichi, Tokyo 108-8506 (JP); MACHIDA, Yohei, Tokyo 103-8534 (JP); NARISAWA, Takuya, Tokyo 103-8534 (JP)
(74) Representative: Prinz & Partner mbB
(86) International application number: PCT/JP2024/013695
(87) International publication number: WO 2024/236926

(57) **Abstract**

To provide a damper device that eliminates a remaining magnetic flux produced by a coil and continuously eliminates a remaining damping force occurring in the damper device without any special control. A damper device includes: a damper main body in which a functional fluid whose apparent viscosity is capable of being adjusted by adjusting a magnetic field is sealed; and a shaft that is slidable with respect to the damper main body in an axial direction, a helical thread groove extending in the axial direction is provided on an outer periphery of the shaft, the damper main body includes a stationary body and a rotating body, the stationary body includes an electromagnetic part that produces the magnetic field, the electromagnetic part includes a coil formed by a wire wound about an axis, a magnetic path forming member that houses the coil and a permanent magnet, the magnetic path forming member has a tubular space filled with the functional fluid, the permanent magnet is disposed on a magnetic path due to the magnetic field in the magnetic path forming member, the rotating body includes a rotary engaging part that is threadedly engaged with the thread groove and a rotary cylindrical part that cylindrically extends in the axial direction, and the rotary cylindrical part is inserted in the tubular space in a state where a gap is formed between the rotary cylindrical part and the magnetic path forming member.

## Description

### TECHNICAL FIELD

The present invention relates to a damper device.

### BACKGROUND ART

There is a known conventional rotary damper that uses a functional fluid such as a magneto rheological fluid, in which the functional fluid fills a space between a damper case and a rotating body, and the damping force can be controlled with an electromagnetic coil. When a direct current is applied to the electromagnetic coil, the damper produces a magnetic field in the damper case, the ferromagnetic particles or the like in the functional fluid form chain clusters between the damper case and the rotating body, and the shear resistance of the clusters causes a damping force.

With such a damper, the damping force can be adjusted and turned on and off by controlling the current to the electromagnetic coil. For example, as disclosed in Patent Literature 1, there is a known controller for a damper in which a functional fluid is sealed that produces a damping force in accordance with the magnetic flux produced by an electromagnetic coil when a direct-current voltage is applied from a direct-current power supply, the controller including an alternating-current power supply that applies an alternating-current voltage to the electromagnetic coil and a voltage control unit that controls the alternating-current power supply to continue applying a stationary alternating-current voltage for a predetermined number of cycles and then apply a damped alternating-current voltage that gradually attenuates as the alternating-current voltage to the electromagnetic coil.

With such a controller for a damper, even if a damping force due to the influence of a remaining magnetic flux (referred to as a "remaining damping force", hereinafter) occurs when the electromagnetic coil is not energized and the damper is in the off state, the chain clusters formed in the functional fluid can be broken by the stationary alternating-current voltage and the damped alternating-current voltage, and the remaining damping force can be removed.

### CITATION LIST

### PATENT LITERATURE

Patent Literature 1
Japanese Patent Laid-Open No. 2018-128056

### SUMMARY Of INVENTION

### PROBLEMS TO BE SOLVED BY THE INVENTION

However, when the conventional controller for a damper is used in a shock absorber for an automobile or the like, the remaining damping force occurs each time a vibration is input to the damper. In a situation where the irregularities on the road surface the damper experiences change rapidly, there is a problem that the control of the alternating-current voltage is complicated and it is difficult to remove the remaining damping force responsive to the vibrations successively input.

The present invention has been devised to solve the problem described above, and an object of the present invention is to provide a damper device that can continuously eliminate a remaining damping force by canceling a remaining magnetic flux by a permanent magnet producing a magnetic flux in the opposite direction to a remaining magnetic flux produced by a coil.

### MEANS FOR SOLVING THE PROBLEMS

A damper device according to the present invention that solve the problem described above includes: a damper main body in which a functional fluid whose apparent viscosity is capable of being adjusted by adjusting a magnetic field is sealed; and a shaft that is slidable with respect to the damper main body in an axial direction, a helical thread groove extending in the axial direction is provided on an outer periphery of the shaft, the damper main body includes a stationary body and a rotating body, the stationary body includes an electromagnetic part that produces the magnetic field, the electromagnetic part includes a coil formed by a wire wound about an axis, a magnetic path forming member that houses the coil and a permanent magnet, the magnetic path forming member has a tubular space filled with the functional fluid, the permanent magnet is disposed on a magnetic path due to the magnetic field in the magnetic path forming member, the rotating body includes a rotary engaging part that is threadedly engaged with the thread groove and a rotary cylindrical part that cylindrically extends in the axial direction, and the rotary cylindrical part is inserted in the tubular space in a state where a gap is formed between the rotary cylindrical part and the magnetic path forming member.

### EFFECTS Of THE INVENTION

The damper device according to the present invention can eliminate the remaining magnetic flux produced by the coil and continuously eliminate the remaining damping force occurring in the damper device without a special control. Furthermore, when the damper device according to the present invention is used in a shock absorber for an automobile or the like, even in a situation where the irregularities on the road surface the damper experiences change rapidly, and the remaining damping force occurs each time a vibration is input to the damper device, the remaining damping force responsive to the vibrations successively input can be easily removed without a complicated control on the alternating-current voltage.

### BRIEF DESCRIPTION Of THE DRAWINGS

[FIG. 1] FIG. 1 is a cross-sectional view of a damper device according to an embodiment of the present invention.
[FIG. 2] FIG. 2 is a cross-sectional view taken along the line A-A in FIG. 1.
[FIG. 3] FIG. 3 is a graph showing damping force versus input current of the damper device according to the embodiment of the present invention.
[FIG. 4] FIG. 4 includes partial cross-sectional views showing examples of the placement of a permanent magnet in the damper device according to the embodiment of the present invention.

### MODE FOR CARRYING OUT THE INVENTION

In the following, a damper device according to an embodiment of the present invention will be described with reference to the drawings. Note that the embodiment described below is not intended to limit the invention according to each claim, and all combinations of features described in the embodiment are not necessarily essential for the solution of the invention.

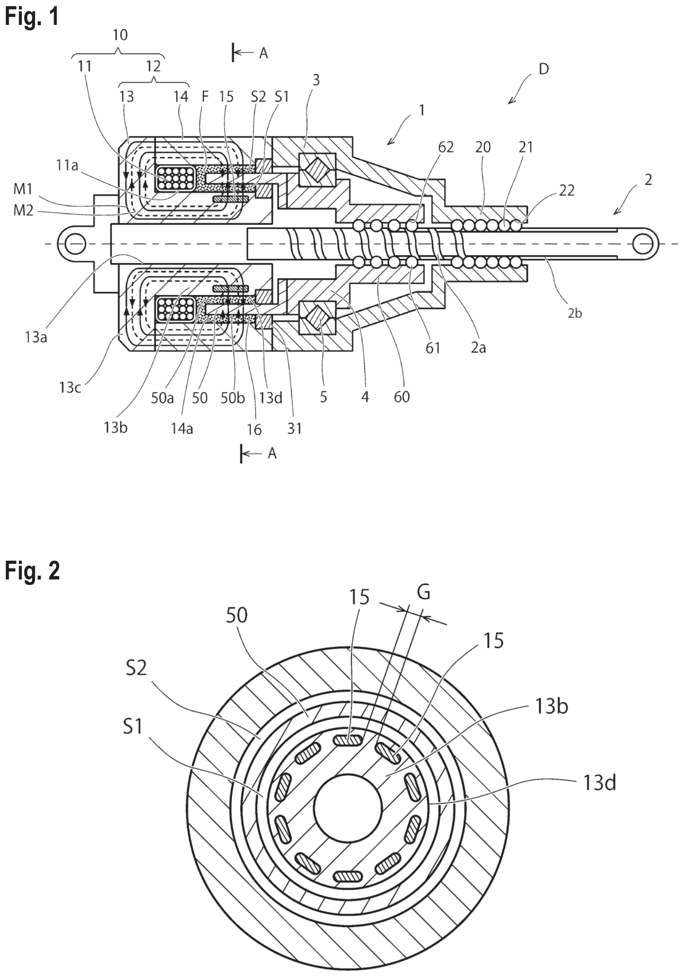

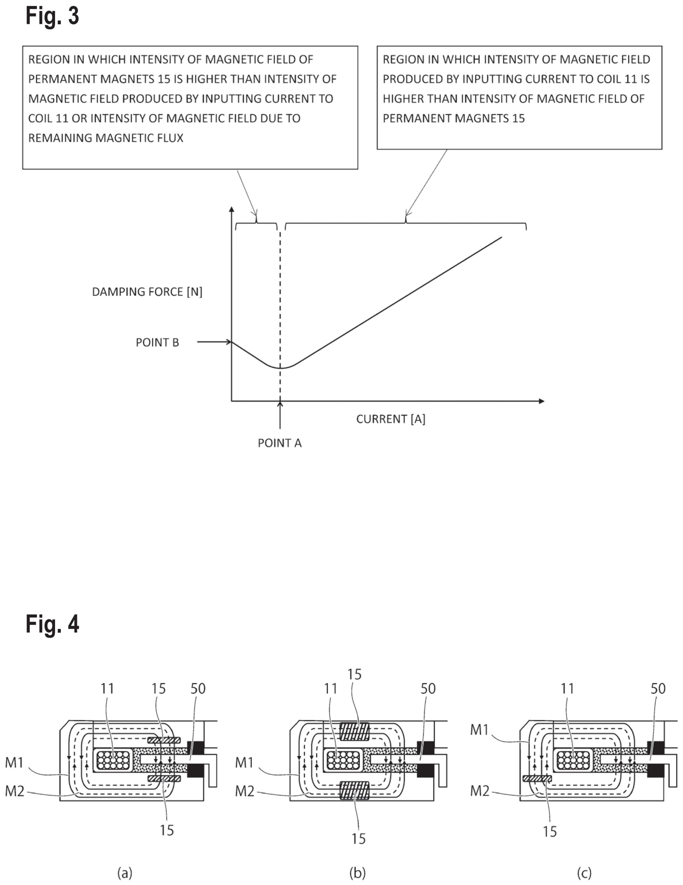

FIG. 1 is a cross-sectional view of the damper device according to the embodiment of the present invention, FIG. 2 is a cross-sectional view taken along the line A-A in FIG. 1, FIG. 3 is a graph showing damping force verses input current of the damper device according to the embodiment of the present invention, and FIG. 4 includes partial cross-sectional views showing examples of the placement of a permanent magnet in the damper device according to the embodiment of the present invention.

As shown in FIG. 1, a damper device D according to this embodiment includes a damper main body 1 having a substantially cylindrical shape and a shaft 2 that is slidable with respect to the damper main body 1 in an axial direction.

The shaft 2 is disposed coaxially with the damper main body 1 in such a manner that one end part of the shaft 2 is located inside the damper main body 1 and another end part of the shaft 2 projects to the outside of the damper main body 1.

A thread groove 2a to be threadedly engaged with a rotary engaging part 60 described later is formed on an outer periphery of the shaft 2. In addition, a guide groove 2b to be engaged with a linear engaging part 20 described later is preferably formed on the outer periphery of the shaft 2.

The damper main body 1 is a stationary body 3 and a rotating body 4 disposed coaxially with the stationary body 3. The rotating body 4 is disposed in the stationary body 3 in such a manner that the rotating body 4 can rotate about the axis with respect to the stationary body 3. The rotating body 4 is held by a thrust bearing 5 in the stationary body 3, for example.

The stationary body 3 includes an electromagnetic part 10 that can form a magnetic path under application of a voltage by a power supply unit (not shown). The stationary body 3 preferably further includes the linear engaging part 20 that guides the shaft in the axial direction.

The electromagnetic part 10 includes a coil 11 and a magnetic path forming member 12, as shown in FIG. 1.

The coil 11 is formed by winding a wire having a conductivity about the axis. The wire of the coil 11 is electrically connected to the power supply unit (not shown), and the coil 11 produces a magnetic field around the coil 11 according to the applied voltage. For example, the coil 11 may be formed by winding a wire around a tubular bobbin made of a resin material or the like. At the axial center of the coil 11, a through-hole 11a is formed through which a tubular part 13b of a yoke 13 described later can be inserted.

The magnetic path forming member 12 includes the yoke 13 and a cover 14, as shown in FIG. 1. The yoke 13 and the cover 14 are made of a magnetic material, such as an iron-based material.

In the magnetic field produced by energization of the coil 11, the magnetic path forming member 12 forms a magnetic flux loop via the yoke 13 and the cover 14. In this specification, the path of the magnetic flux loop formed by the coil 11 is defined as a magnetic path M1. Note that the magnetic force of the magnetic path M1 formed by the magnetic path forming member 12 is determined by the intensity of the magnetic field produced by the coil 11. Therefore, the number of windings of the wire of the coil 11 is set according to the required magnetic force of the magnetic path M1.

The yoke 13 has the tubular part 13b that extends in the axial direction and a flange part 13c that projects outward in the radial direction from one end part of the tubular part 13b. The yoke 13 holds the coil 11 with the tubular part 13b thereof being inserted in the through-hole 11a of the coil 11 and the flange part 13c thereof abutting against one end face of the coil 11. The tubular part 13b has a through-hole 13a that penetrates the tubular part 13b at the axial center thereof. The through-hole 13a has a diameter greater than the outer diameter of the shaft 2, and the shaft 2 is inserted in the through-hole 13a.

As shown in FIG. 1, the yoke 13 includes a plurality of permanent magnets 15 arranged at positions on the magnetic path M1 on the inner side of a rotating cylindrical part 50 of the rotating body 4 described later.

As shown in FIGS. 1 and 2, the permanent magnets 15 are planar magnets extending in the axial direction and annularly arranged along an outer periphery 13d of the yoke 13. The permanent magnet 15 is disposed in such a manner that the direction of the magnetic flux is opposite to the direction of the magnetic path M1 produced by the coil 11, and produces a magnetic flux loop via the yoke 13 and the cover 14. That is, the permanent magnet 15 produces a magnetic flux loop in the direction of canceling the magnetic path M1 produced by the coil 11. In this specification, the path of the magnetic flux loop produced by the permanent magnet 15 is defined as a magnetic path M2.

Furthermore, as shown in FIG. 2, a predetermined gap G is preferably formed between adjacent permanent magnets 15. In the gaps G, the magnetic flux of the magnetic path M1 is not interfered with by the magnetic path M2 produced by the permanent magnets 15.

The cover 14 is a tubular member that extends in the axial direction and houses the coil 11 and the tubular part 13b of the yoke 13 therein, as shown in FIG. 1. One end face of the cover 14 abuts against the flange part 13c of the yoke 13. Therefore, in the magnetic path M1 produced by the coil 11 and the magnetic path M2 produced by the permanent magnet 15, it is ensured that the magnetic flux is not interrupted and has a loop shape.

A tubular space 16 is formed between an inner periphery 14a of the cover 14 and the outer periphery 13d of the tubular part 13b of the yoke 13, and the tubular space 16 is filled with a functional fluid F.

As the functional fluid F, for example, a magnetic fluid containing ferromagnetic particles, such as iron powder, dispersed in a liquid, such as oil, or a magneto rheological fluid referred to as an MR fluid can be used. The functional fluid F exhibits a similar behavior to common hydraulic fluids when no magnetic field is applied. However, when a magnetic field is externally applied, the ferromagnetic particles uniformly dispersed in the liquid are combined in the direction of the magnetic field to form a chain cluster. The cluster resists the flow and therefore can improve the apparent viscosity of the functional fluid F. The change in viscosity caused by the magnetic field is reversible, and the original state can be recovered by removing the magnetic field. Furthermore, the degree of the change in viscosity can be adjusted by changing the intensity of the magnetic field.

The linear engaging part 20 supports the shaft 2 in such a manner that the shaft 2 is movable in the axial direction. For example, a load rolling groove 22 that corresponds to the guide groove 2b of the shaft 2 is formed in the linear engaging part 20.

The linear engaging part 20 is attached to the shaft 2 via a plurality of balls 21 rolling between the guide groove 2b formed on the shaft 2 and the load rolling groove 22. The shaft 2 is assembled to the linear engaging part 20 in such a manner that the balls 21 can finitely circulate in the axial direction of the load rolling groove 22.

Alternatively, the linear engaging part 20 may have a no-load rolling path (not shown) extending in the axial direction, and the no-load rolling path is connected to the load rolling groove 22 at the opposite ends thereof so that the balls 21 endlessly circulate in the linear engaging part 20. Note that although a mechanism using a no-load rolling path has been described as the endless circulation mechanism, the endless circulation mechanism is not limited to this, and various circulation mechanisms can be used. For example, an end plate attached to an end part of the linear engaging part 20 may have a circulation structure.

The rotating body 4 has a rotary engaging part 60 that guides the shaft 2 while rotating about the axis with respect to the shaft 2 and a rotary cylindrical part 50 inserted in the tubular space 16 of the stationary body 3.

The rotary engaging part 60 has a load rolling groove 62 that corresponds to the thread groove 2a of the shaft 2, for example.

The rotary engaging part 60 is attached to the shaft 2 via a plurality of balls 61 rolling between the thread groove 2a and the load rolling groove 62 in such a manner that the rotary engaging part 60 can move in the axial direction. The rotary engaging part 60 further has a return piece (not shown).

The return piece is fixed to the rotary engaging part 60 so as to extend over several turns of the thread groove 2a of the shaft 2, and is configured so that balls 61 picked up from the thread groove 2a of the shaft 2 by an end part of the return piece roll through the return piece and are fed into a turn of the thread groove 2a several turns behind of the turn from which the balls 61 are picked up so that the balls 61 endlessly circulate in the rotary engaging part 60. Note that although a mechanism using a return piece has been described as the endless circulation mechanism, the endless circulation mechanism is not limited to the return piece, and various circulation mechanisms can be used. For example, an end plate attached to an end part of the rotary engaging part 60 in the axial direction may have a circulation structure, or a deflector may be used to return the balls 61 to a turn of the thread groove 2a a predetermined number of turns behind of the turn from which the balls 61 are picked up.

The rotary cylindrical part 50 is made of a magnetic material, such as an iron-based material, and has the shape of a cylinder that has a thin wall and extends in the axial direction. The rotary cylindrical part 50 is inserted into the tubular space 16 filled with the functional fluid F, an inner periphery 50a of the rotary cylindrical part 50 is opposed to the outer periphery 13d of the yoke 13 with a gap therebetween, and an outer periphery 50b of the rotary cylindrical part 50 is opposed to the inner periphery 14a of the cover 14 with a gap therebetween. In this specification, the gap between the inner periphery 50a and the outer periphery 13d is defined as a gap S1, and the gap between the outer periphery 50b and the inner periphery 14a is defined as a gap S2. In the gaps S1 and S2, the functional fluid F exists.

As shown in FIG. 1, an oil seal 31 that closes the gaps S1 and S2 is preferably attached to another end part of the yoke 13 and another end part of the cover 14. The oil seal 31 can prevent the functional fluid F in the tubular space 16 from leaking to the outside space.

Next, an example of an operation of the damper device D will be described.

The damper device D according to the embodiment can be used in a shock absorber for an automobile or the like, for example. In this case, the damper device D is attached in such a manner that the damper main body 1 is located on the side of the vehicle body, the shaft 2 is located on the side of the wheel, and the axial direction of the damper device D is aligned with the vertical direction.

When the vehicle provided with the damper device D runs over irregularities on the road surface, the shaft 2 attached on the side of the wheel slides in the axial direction with respect to the damper main body 1 attached on the side of the vehicle body. Since the guide groove 2b is engaged with the linear engaging part 20, the shaft 2 can slide with respect to the damper main body 1 without rotation. In addition, since the shaft 2 is inserted in the through-hole 13a of the yoke 13, the shaft 2 can slide in the damper main body 1 without interference.

Since the thread groove 2a is engaged with the rotary engaging part 60, the shaft 2 makes the rotating body 4 rotate about the axis as the shaft 2 slides in the axial direction. Since the rotating body 4 is attached to the stationary body 3 via the thrust bearing 5, the rotating body 4 rotates about the axis without moving with respect to the stationary body 3 in the axial direction.

The rotating body 4 includes the rotary cylindrical part 50 that is to be inserted into the tubular space 16 filled with the functional fluid F, as described above. Therefore, the rotary cylindrical part 50 rotates in the functional fluid F as the rotating body 4 rotates.

At this point, if a current is input to the coil 11, a magnetic field is produced and forms the magnetic path M1. The magnetic path M1 passes through the gaps S1 and S2. Since the gaps S1 and S2 are filled with the functional fluid F, the ferromagnetic particles dispersed in the functional fluid F are combined in the direction of the magnetic flux according to the magnetic path M1 to form a chain cluster.

When the rotary cylindrical part 50 rotates in the functional fluid F in which such clusters are formed, the clusters formed in the gaps S1 and S2 cause a shear resistance. That is, with the damper device D according to the embodiment, the apparent viscosity of the functional fluid F can be adjusted by controlling the input current to the coil 11, thereby providing a required damping property.

Next, a case will be described where the damping force of the damper device D according to the embodiment is reduced to zero.

As is generally known, once a magnetic field is produced by inputting a current to the coil, the loop-shaped magnetic flux remains around the coil even if the current is turned off. This is because the components forming the magnetic path are magnetized. Therefore, with the conventional damper device, even if the current input to the coil is turned off, clusters remain in the functional fluid because of the remaining magnetic flux, and the damping force of the damper device cannot be reduced to zero.

In the damper device D according to the embodiment, the permanent magnets 15 are disposed on the magnetic path M1 produced by the coil 11. The permanent magnets 15 are disposed in such a manner that the direction of the magnetic flux of the magnetic path M2 is opposite to the magnetic path M1. Therefore, with the damper device D according to the embodiment, the magnetic path M2 produced by the permanent magnets 15 cancels the remaining magnetic flux of the magnetic path M1 produced by the coil 11, so that the damping force of the damper device D can be reduced to zero by turning off the current input to the coil 11.

Furthermore, as shown in FIG. 2, the permanent magnets 15 are annularly arranged with gaps G between adjacent permanent magnets 15. In the gaps G, the magnetic path M1 is not interfered with by the magnetic path M2 produced by the permanent magnets 15. Therefore, although the damper device D has the permanent magnets 15 that produce the magnetic path M2 in the opposite direction to the magnetic path M1 produced by the coil 11, the damper device D can have an arbitrary damping force by controlling the current input to the coil 11.

As described above, the damper device D according to the embodiment can eliminate the remaining magnetic flux due to the coil 11 and continuously eliminate the remaining damping force occurring in the damper device D without any special control.

Note that the intensity of the magnetic field due to the remaining magnetic flux is basically constant, and therefore, the permanent magnets 15 that produce a magnetic flux loop of a predetermined magnetic force can reduce the damping force of the damper device D to zero when the current input to the coil 11 is turned off, as described above. However, when the intensity of the magnetic field due to the remaining magnetic flux is lower than expected, the magnetic field of the permanent magnets 15 may cause a damping force when the current input to the coil 11 is turned off.

Specifically, if the intensity of the magnetic field due to the remaining magnetic flux is lower than expected, as shown in FIG. 3, when the current input to the coil 11 is lower than a certain value indicated at a point A, the intensity of the magnetic field of the permanent magnets 15 is higher than the intensity of the magnetic field produced by inputting the current to the coil 11 or the intensity of the magnetic field due to the remaining magnetic flux. In this case, a damping force indicated at a point B is caused by the magnetic field of the permanent magnets 15 even if the current input to the coil 11 is turned off.

Thus, when the intensity of the magnetic field due to the remaining magnetic flux is lower than the intensity of the magnetic field of the permanent magnets 15, the current input to the coil 11 is preferably controlled with reference to a current value that produces a magnetic field of an intensity equal to the difference between the intensity of the magnetic field of the permanent magnets 15 and the intensity of the magnetic field due to the remaining magnetic flux. That is, when determining the damping force of the damper device D, the input current is preferably controlled with reference to a current value at the point A at which the sum of the damping force due to the coil 11 and the damping force due to the permanent magnets 15 is the lowest.

Next, effects of the damper device D according to the embodiment other than those described above will be described.

As is generally known, the ferromagnetic particles dispersed in the functional fluid settle after a lapse of a certain time under the force of gravity. Therefore, with the conventional damper device, it is considered that the ferromagnetic particles settle in the lower part in the vertical direction of the space filled with the functional fluid if no current is input to the coil to operate the damper device for a long time.

Furthermore, when a conventional damper device having the same structure as the damper device D according to the embodiment except that the damper device does not include the permanent magnets 15 is activated after the damper device is out of service for a long time, it is confirmed that the damping force is higher than the set value immediately after activation and settles to the set value after a lapse of a certain time after activation.

It is considered that when the conventional damper device is out of service for a long time, the cluster density of the ferromagnetic particles in the functional fluid F increases in the environment of the high remaining magnetic field in the tubular space 16, so that the apparent viscosity of the functional fluid F is higher immediately after activation. It is also considered that once a certain time elapses after activation and the functional fluid F is sufficiently agitated in the tubular space 16, the ferromagnetic particles are uniformly dispersed in the functional fluid F, the clusters are uniformly formed in the tubular space 16, and the apparent viscosity of the functional fluid F settles to the set value.

Unlike the conventional damper device described above, it is confirmed that the damper device D according to the embodiment that includes the permanent magnets 15 can produce a damping force of the set value immediately after activation even if the damper device D has been out of service for a long time.

It is considered that this is because the damper device D according to the embodiment includes the permanent magnets 15, and therefore, the ferromagnetic particles in the functional fluid F are appropriately dispersed under the influence of the magnetic flux density appropriately made uniform by the remaining magnetic flux of the magnetic path M due to the coil 11 and the magnetic path M2 due to the permanent magnet 15. That is, it is considered that the damper device D according to the embodiment can prevent settling of the ferromagnetic particles in the functional fluid F.

Note that although a case has been described in which the rotating body 4 has only one rotary cylindrical part 50 inserted in the tubular space 16 filled with the functional fluid F in the embodiment described above, the rotating body 4 may have a plurality of rotary cylindrical parts 50 depending on the magnitude of the required damping force of the damper device D.

Furthermore, in the embodiment described above, a case has been described in which the permanent magnets 15 are disposed only on the inner side of the rotary cylindrical part 50 of the rotating body 4. However, the permanent magnets 15 have only to be disposed on the magnetic path M1 due to the coil 11. For example, the permanent magnets 15 may be disposed on the radially inner side and the radially outer side of the rotary cylindrical part 50 as shown in FIG. 4(a), may be disposed on the radially inner side and the radially outer side of the coil 11 as shown in FIG. 4(b), or may be disposed at positions where the permanent magnets 15 do not overlap with the coil 11 and the rotary cylindrical part 50 when viewed in the radial direction as shown in FIG. 4(c).

Note that although a case has been described in which the damper device D is used in a shock absorber for an automobile or the like in the embodiment described above, this is not intended to be limiting, and the damper device D according to the embodiment can be used in a suspension device mounted on a mobile body, such as a personal mobility device or a delivery robot. As is apparent from the description of the claims, other modifications or improvements can be included in the technical scope of the present invention.

### REFERENCE SIGNS LIST

- 1: damper main body
- 2: shaft
- 2a: thread groove
- 3: stationary body
- 4: rotating body
- 10: electromagnetic part
- 11: coil
- 12: magnetic path forming member
- 15: permanent magnet
- 16: tubular space
- 50: rotary cylindrical part
- 60: rotary engaging part
- D: damper device
- F: functional fluid
- M1, M2: magnetic path

## Claims

1. A damper device, comprising:
a damper main body in which a functional fluid whose apparent viscosity is capable of being adjusted by adjusting a magnetic field is sealed; and
a shaft that is slidable with respect to the damper main body in an axial direction,
wherein a helical thread groove extending in the axial direction is provided on an outer periphery of the shaft,
the damper main body includes a stationary body and a rotating body,
the stationary body includes an electromagnetic part that produces the magnetic field,
the electromagnetic part includes a coil formed by a wire wound about an axis, a magnetic path forming member that houses the coil and a permanent magnet,
the magnetic path forming member has a tubular space filled with the functional fluid,
the permanent magnet is disposed on a magnetic path due to the magnetic field in the magnetic path forming member,
the rotating body includes a rotary engaging part that is threadedly engaged with the thread groove and a rotary cylindrical part that cylindrically extends in the axial direction, and
the rotary cylindrical part is inserted in the tubular space in a state where a gap is formed between the rotary cylindrical part and the magnetic path forming member.

2. The damper device according to claim 1, wherein the permanent magnet is disposed in such an orientation that a magnetic flux of the permanent magnet cancels a magnetic flux of the magnetic path.

3. The damper device according to claim 1, wherein the permanent magnet is disposed in an annular configuration that is coaxial with the coil.

4. The damper device according to claim 3, wherein a plurality of the permanent magnets are disposed with a gap between adjacent permanent magnets.

5. The damper device according to claim 3, wherein the permanent magnet is disposed on a radially inner side of the rotary cylindrical part.

6. The damper device according to claim 1, wherein the damper device is attached to a wheel of a moving body as a suspension device.
